# EUROPEAN PATENT SPECIFICATION

(11) **EP 3 996 975 B1**
(45) Date of publication and mention of the grant of the patent: **17.12.2025**
(21) Application number: 19740327.2
(22) Date of filing: 08.07.2019
(51) Int. Cl.: B62D 15/02

(54) **A DRIVER ASSISTANCE SYSTEM**
FAHRERASSISTENZSYSTEM
SYSTÈME D'ASSISTANCE AU CONDUCTEUR

(43) Date of publication of application: 18.05.2022
(73) Proprietor: VOLVO TRUCK CORPORATION, 405 08 Göteborg (SE)
(72) Inventor: ÖST, David, 413 27 Göteborg (SE)
(74) Representative: Kransell & Wennborg KB
(86) International application number: PCT/EP2019/068232
(87) International publication number: WO 2021/004615

(56) References cited:
- EP-A1- 1 977 946
- EP-A1- 2 330 009
- WO-A1-2014/029549
- DE-A1- 102007 027 495
- US-A1- 2010 191 421
- US-A1- 2016 368 534

## Description

### TECHNICAL FIELD

The invention relates to a driver assistance system for providing steering assistance to a driver of a vehicle during driving, to a method for providing steering assistance to a driver of a vehicle during driving, to a vehicle, to a computer program and/or to a computer readable medium.

The invention can be applied in heavy-duty vehicles, such as trucks, buses and construction equipment. Although the invention will be described with respect to heavy-duty trucks, the invention is not restricted to this particular vehicle, but may also be used in other vehicles such as light-weight trucks, articulated haulers, excavators, wheel loaders, and backhoe loaders.

### BACKGROUND

Vehicle driver assistance systems for supporting a driver with movement control of the vehicle during driving has been known for a long time. Known systems are for example braking assistance systems, such as anti-lock braking systems (ABS), but also steering assistance systems for supporting a driver to e.g. keep the vehicle within a road lane. The latter also being known as lane keeping assistance systems.

A lane keeping assistance system may warn a driver, by e.g. audio or tactile warnings, when the vehicle is leaving its lane. Further, the lane keeping assistance system may also assist in keeping the vehicle within and e.g. centered in the lane, and also take over steering control in more challenging situations.

One problem which may occur when using a steering assistance system together with e.g. an automatic cruise control (ACC) system is that the driver occasionally may lose focus on the driving. It is important that the driver is engaged in the driving since the system may not be capable of handling all types of traffic situations.

According to its abstract, EP1977946A1 relates to a method involving monitoring surrounding field of a vehicle upon obstacles. A reference trajectory of the vehicle during the detection of the obstacles is changed in such a manner that safe passing of the detected obstacles is allowed. Width of the obstacles is detected, where a safety margin, which exceeds the width of the obstacles, is assigned to the obstacle. The detected obstacle is classified, and an extent of the safety margin is specified around the obstacles based on the classification.

According to its abstract, DE102007027495A1 relates to a method which involves detecting left and right traffic lane boundaries of a traffic lane driven by a motor vehicle and a position of the vehicle relative to the lane, and detecting lateral objects. A warning is produced to a driver during exceeding preset lateral distance limits, where the limits are varied by the driver for left and right sides of the vehicle independent of each other. The limits for lateral distances with respect to the objects are varied by the driver independent of the limits for the lateral distances with respect to the boundaries.

According to its abstract, EP2330009A1 relates to a vehicle control apparatus which includes a calculation section configured to calculate a first risk level present on the left of the vehicle and a second risk level present on the right of the vehicle, a setting section configured to set a first control threshold for the left of the vehicle based on the first risk level and to set a second control threshold for the right of the vehicle based on the second risk level, a change section configured to change at least one of the first and second control thresholds based on the first and second risk levels, and a control section configured to control the vehicle based on the changed control threshold.

According to its abstract, WO2014029549A1 relates to a method for operating a driver assistance system for a vehicle driving on a roadway, comprising the following steps: - detecting a narrow roadway section lying ahead of the vehicle as well as at least one oncoming vehicle approaching the vehicle; - determining the distance to and the width of the narrow roadway section as well as the distance to and the width and current cruising speed of the oncoming vehicle; - predicting the expected driving paths of the vehicle and the oncoming vehicle and determining a point where the two vehicles are expected to pass each other; - assessing the predicted traffic situation; and - activating a safety device if the point where the two vehicles are expected to pass each other lies in the area of the narrow roadway section, the point in time when the safety device is activated being determined according to the current traffic situation.

According to its abstract, US2016368534A1 relates to a method for steering assistance in an autonomous or semi-autonomous vehicle comprises identifying an upcoming curve, detecting an inner lane boundary and an outer lane boundary of the upcoming curve, determining a safety distance between the vehicle and the outer lane boundary, and controlling a position of the vehicle in the curve with respect to the inner and outer lane boundary such that the vehicle is at a distance from the outer lane boundary which is equal to or larger than the safety distance. A steering assistance system is also described capable of performing the method for steering assistance. US2016368534A1 shows in particular the features of the preamble of claim 1.

According to its abstract, US2010191421 A1 relates to a system and an operating method which are provided for supporting lane keeping of a vehicle equipped with a steering device. The system and operating method include providing vehicle related information; providing environment related information; combining vehicle and environment related information; predicting a future trajectory of the vehicle based on vehicle and environment related information; estimating a desired lateral lane position of the vehicle and/or a guiding force; comparing the future trajectory and the desired lateral lane position; deciding if a guiding force is to be provided to the steering device; and, if guiding force is to be provided, defining an amount of said guiding force depending on a hierarchically ordered set describing a predetermined driving behavior of the vehicle, adapting the amount of guiding force depending on the direction in which the vehicle is intended to move and activating one or more actuators for supplying the adapted amount of guiding force to the steering device.

Hence, although known steering assistance systems have improved vehicle safety and the driving experience, there is still room for improved steering assistance systems.

### SUMMARY

In view of the above, an object of the invention is to provide a driver assistance system for providing steering assistance to a driver of a vehicle during driving and/or a method for providing steering assistance to a driver of a vehicle during driving which at least in some aspect alleviates at least one of the drawbacks of the prior art, and/or which provides a good alternative.

According to a first aspect, the object is achieved by driver assistance system for providing steering assistance to a driver of a vehicle during driving according to claim 1.

According to a second aspect, the object is achieved by a method according to claim 9. According to a third aspect, the object is achieved by a vehicle according to claim 13. According to a fourth aspect, the object is achieved by a computer program according to claim 14. According to a fifth aspect, the object is achieved by a computer readable medium according to claim 15.

According to the first aspect of the invention, the object is achieved by a driver assistance system for providing steering assistance to a driver of a vehicle during driving, comprising: a control unit configured to receive information about direction, curvature and/or change in curvature of a road lane ahead of the vehicle, which road lane is considered as safe for the vehicle when the vehicle is driving within lateral road lane limits of the road lane,
the control unit being further configured to provide steering assistance to the driver for keeping the vehicle within the road lane, which steering assistance is based on a trajectory to follow for the vehicle,
wherein the control unit is configured to calculate the trajectory to follow based on the direction, curvature and/or change in curvature of the road lane when the vehicle is laterally positioned within a lateral safe band of the road lane and/or when the vehicle is laterally positioned within the lateral safe band of the road lane and predicted to not laterally exceed the lateral safe band within a predetermined time period or within a predetermined distance of travel of the vehicle, which lateral safe band is defined by predetermined safety margins with respect to the respective lateral road lane limits.

The trajectory to follow is hence calculated on at least one of direction, curvature and change in curvature of the road lane. A direction of the road lane may be defined as an approximation of the heading of the road lane, which for example may correlate to a tangential direction of a line following a longitudinal extension of the road lane, which line may e.g. be laterally centered in the road lane. A curvature of the road lane may for example be defined as a radius of curvature in a lateral/horizontal plane of the road lane. A change in curvature of the road lane may be defined as a change in radius of the curvature in the lateral/horizontal plane of the road lane, i.e. a first order derivative of the curvature of the road lane.

By the provision of the driver assistance system as disclosed herein, an improved steering assistance for the driver can be achieved in which unnecessary and/or disturbing steering assistance may be avoided whilst the provided steering assistance will support the driver in keeping the vehicle on track in the road lane. More particularly, the inventor has realized that the steering assistance does not need to be based on a lateral reference position for the vehicle when the vehicle is driving within the lateral safe band, but rather the steering assistance is only based on direction, curvature and/or change in curvature of the road lane when the vehicle is within the lateral safe band and/or when the vehicle is laterally positioned within the lateral safe band of the road lane and predicted to not laterally exceed the lateral safe band within a predetermined time period or within a predetermined distance of travel of the vehicle. This also allows the driver to more actively take part in the driving when the vehicle is positioned within the lateral safe band, thereby reducing the risk that the driver loses focus on the driving, as mentioned in the above. Still further, the inventor has also realized that it on at least some occasions may be beneficial for the driver to select the lateral position of the vehicle when being in the lateral safe band. For example, when the vehicle overtakes another relatively slower moving vehicle on a highway, the driver may not want to be too close to the other vehicle during the overtaking. Instead, it may be preferred to laterally position the vehicle with respect to the other vehicle by an increased lateral distance which feels safer for the driver. Hence, the driver may in such a situation decide the lateral position of the vehicle with respect to the other vehicle. As another example, a specific lateral position within the lateral safe band may be more preferred for the driver's forward visibility, and therefore it may be beneficial if the driver, instead of the steering assistance system, selects the lateral position within the lateral safe band.

According to the invention, the control unit is configured to calculate the trajectory to follow only based on the direction, curvature and/or change in curvature of the road lane when the vehicle is laterally positioned within the lateral safe band of the road lane and/or when the vehicle is laterally positioned within the lateral safe band of the road lane and predicted to not laterally exceed the lateral safe band within a predetermined time period or within a predetermined distance of travel of the vehicle. Thereby, no other input may be required for calculating the trajectory to follow when the vehicle is laterally positioned within the lateral safe band of the road lane and/or when the vehicle is laterally positioned within the lateral safe band of the road lane and predicted to not laterally exceed the lateral safe band within a predetermined time period or within a predetermined distance of travel of the vehicle

Optionally, the driver assistance system may be configured so that the driver is in control of the lateral position of the vehicle when the vehicle is laterally positioned within the lateral safe band of the road lane and/or when the vehicle is laterally positioned within the lateral safe band of the road lane and predicted to not laterally exceed the lateral safe band within a predetermined time period or within a predetermined distance of travel of the vehicle. Hence, and as already mentioned in the above, it has been realized that it is preferred that the driver decides the lateral position of the vehicle when the vehicle is laterally positioned within the lateral safe band of the road lane and/or when the vehicle is laterally positioned within the lateral safe band of the road lane and predicted to not laterally exceed the lateral safe band within a predetermined time period or within a predetermined distance of travel of the vehicle

Optionally, the control unit may further be configured to calculate the trajectory to follow further based on, or only based on, a lateral reference position of the road lane with respect to the vehicle when the vehicle is outside the lateral safe band and/or when the vehicle is laterally positioned within the lateral safe band of the road lane and predicted to laterally exceed the lateral safe band within a predetermined time period or within a predetermined distance of travel of the vehicle. Thereby, the steering assistance system may provide a higher degree of steering assistance when the vehicle is assumed to not be able to stay within the road lane. Hence, the steering assistance system may provide a varying degree of steering assistance depending on the lateral position of the vehicle within the road lane, thereby providing safer and more comfortable driving.

Optionally, the road lane may be a virtual road lane created by information from at least one of an external perception sensor system of the vehicle, a vehicle state sensor system and auxiliary data, such as road map data and/or GNSS (global navigation satellite system) data. Just as a matter of example, an external perception sensor system may comprise one or more sensors, such as RADAR (RAdio Detection And Ranging), LIDAR (light detection, and ranging), camera etc., which are configured to obtain information about the surroundings outside the vehicle. This may include information about other vehicles, pedestrians, road lane markings, road/crash barriers, other objects, such as buildings etc. Furthermore, a vehicle state sensor system may comprise one or more sensors which are configured to obtain information about vehicle speed, acceleration, yaw rate, wheel angle etc. of the vehicle. By use of one or more of the above mentioned systems, a virtual road lane ahead of the vehicle may be defined and created which is considered as safe for the vehicle and the trajectory to follow can be calculated based on the information from the above mentioned systems. For example, an obstacle on the road, such as a still standing vehicle, may be identified by the external perception sensor system, and thereby the virtual road lane may be defined so that the obstacle is not within the virtual lateral road lane limits. Further, as another example, the lateral extension of the virtual road lane may vary depending on factors such as speed and acceleration of the vehicle which is identified by the vehicle state sensor system. Still further, the lateral extension of the lateral safe band may also vary along the virtual road lane depending on one or more factors such as obstacles identified by the external perception sensor system, speed and acceleration of the vehicle identified by the vehicle state sensor system, road map data etc. Hence, the predetermined safety margins defining the lateral safe band may be variable along the road lane based on external objects which are considered as unsafe for the vehicle during driving. Still optionally, the predetermined safety margins defining the lateral safe band may be variable along the road lane so that the lateral safe band extends outside at least one visually identifiable road lane marking when a region outside the at least one visually identifiable road lane marking is considered as safe for the vehicle during driving. It has namely been realized that on some occasions it may be allowed to, at least during shorter time periods and/or along a predetermined distance, drive outside visually identifiable road lane markings. This may improve the comfort for the driver since the steering assistance system therefore may intervene to a lesser degree in such a situation when it has been determined as safe to drive outside the visually identifiable road lane marking. The determination of whether it is safe to drive outside the visually identifiable road lane marking is preferably determined based on information obtained from the aforementioned vehicle perception sensor system, vehicle state senor system and/or auxiliary information, such as road map data and or GNSS data. Still optionally, the predetermined safety margins defining the lateral safe band may be variable along the road lane so that the lateral safe band extends inside at least one visually identifiable road lane marking when a region outside the at least one visually identifiable road lane marking, such as an adjacent road lane, is considered as unsafe for the vehicle during driving.

Optionally, the system may be configured so that a strength of the provided steering assistance to the driver for keeping the vehicle within the road lane is having different magnitudes depending on the lateral position of the vehicle within the road lane, which strength is defined as an amount of torque which the driver needs to add on a manual steering controller of the vehicle to alter the vehicle's lateral acceleration. The manual steering controller may hence comprise a force feedback function and may be a steering wheel, a joystick or the like which a driver can use for steering the vehicle. Still optionally, the system may be configured so that the magnitude of the strength of the provided steering assistance is lower when the vehicle is laterally positioned within the lateral safe band than the magnitude of the strength of the provided steering assistance when the vehicle is laterally positioned outside the lateral safe band and/or the magnitude of the strength of the provided steering assistance is lower when the vehicle is laterally positioned within the lateral safe band and predicted to not laterally exceed the lateral safe band within a predetermined time period or within a predetermined distance of travel of the vehicle than the magnitude of the strength of the provided steering assistance when the vehicle is laterally positioned within the lateral safe band of the road lane and predicted to laterally exceed the lateral safe band within the predetermined time period or within the predetermined distance of travel of the vehicle. By having different strength of the provided steering assistance as mentioned in the above, the comfort for the driver may be improved whilst not compromising with safety. Further, safety may by this configuration be even further improved since it may reduce the risk of the driver losing focus.

According to the second aspect of the invention, the object is achieved by a method for providing steering assistance to a driver of a vehicle during driving, comprising:
- receiving information about direction, curvature and/or change in curvature of a road lane ahead of the vehicle, which road lane is considered as safe for the vehicle when the vehicle is driving within lateral road lane limits of the road lane,
- providing steering assistance to the driver for keeping the vehicle within the road lane, which steering assistance is based on a trajectory to follow for the vehicle, and
- calculating the trajectory to follow based on the direction, curvature and/or change in curvature when the vehicle is laterally positioned within a lateral safe band of the road lane and/or when the vehicle is laterally positioned within the lateral safe band of the road lane and predicted to not laterally exceed the lateral safe band within a predetermined time period or within a predetermined distance of travel of the vehicle, which lateral safe band is defined by predetermined safety margins with respect to the respective lateral road lane limits.

Advantages and effects provided by the second aspect of the invention are largely analogous to the advantages and effects as provided by the driver assistance system according to the embodiments of the first aspect of the invention. It shall also be noted that all embodiments of the second aspect of the invention are applicable to and combinable with all embodiments of the first aspect of the invention and vice versa.

According to the invention, the trajectory to follow is only calculated based on the direction, curvature and/or change in curvature when the vehicle is laterally positioned within the lateral safe band of the road lane and/or when the vehicle is laterally positioned within the lateral safe band of the road lane and predicted to not laterally exceed the lateral safe band within a predetermined time period or within a predetermined distance of travel of the vehicle.

Optionally, the method may be configured so that the driver is in control of the lateral position of the vehicle when the vehicle is laterally positioned within the lateral safe band and/or when the vehicle is laterally positioned within the lateral safe band of the road lane and predicted to not laterally exceed the lateral safe band within a predetermined time period or within a predetermined distance of travel of the vehicle.

Optionally, the method may further comprise calculating the trajectory to follow further based on, or only based on, a lateral reference position of the road lane with respect to the vehicle when the vehicle is outside the lateral safe band and/or when the vehicle is laterally positioned within the lateral safe band of the road lane and predicted to laterally exceed the lateral safe band within a predetermined time period or within a predetermined distance of travel of the vehicle.

Optionally, a strength of the provided steering assistance to the driver for keeping the vehicle within the road lane may have different magnitudes depending on the lateral position of the vehicle within the road lane, which strength is defined as an amount of torque which the driver needs to add on a manual steering controller of the vehicle to alter the vehicle's lateral acceleration. Still optionally, the magnitude of the strength of the provided steering assistance may be lower when the vehicle is laterally positioned within the lateral safe band than the magnitude of the strength of the provided steering assistance when the vehicle is laterally positioned outside the lateral safe band and/or the magnitude of the strength of the provided steering assistance is lower when the vehicle is laterally positioned within the safe band and predicted to not laterally exceed the lateral safe band within a predetermined time period or within a predetermined distance of travel of the vehicle than the magnitude of the strength of the provided steering assistance when the vehicle is laterally positioned within the lateral safe band of the road lane and predicted to laterally exceed the lateral safe band within the predetermined time period or within the predetermined distance of travel of the vehicle.

According to the third aspect of the invention, the object is achieved by a vehicle comprising the driver assistance system according to any one of the embodiments of the first aspect of the invention. According to the fourth aspect of the invention, the object is achieved by a computer program comprising program code means for performing the steps of the method according to any one of the embodiments of the second aspect of the invention, when said program is run on a computer. According to the fifth aspect of the invention, the object is achieved by a computer readable medium carrying a computer program comprising program code means for performing the steps of the method according to any one of the embodiments of the second aspect of the invention, when said program product is run on a computer. The computer program and/or the computer readable medium is preferably implemented into a vehicle for providing steering assistance to a driver of the vehicle.

### BRIEF DESCRIPTION OF THE DRAWINGS

With reference to the appended drawings, below follows a more detailed description of embodiments of the invention cited as examples.

In the drawings:
Fig. 1 shows a vehicle according to an example embodiment of the present invention;
Fig. 2 shows a schematic view of a road lane in which a vehicle according to an example embodiment of the invention is driving;
Fig. 3 shows a flowchart of a method according to an example embodiment of the present invention; and
Fig. 4 shows a schematic illustration of a driver assistance system for providing steering assistance to a driver of a vehicle.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION OF EXAMPLE EMBODIMENTS OF THE INVENTION

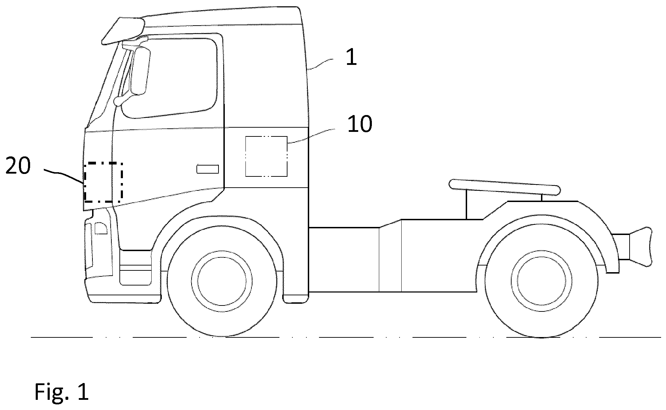

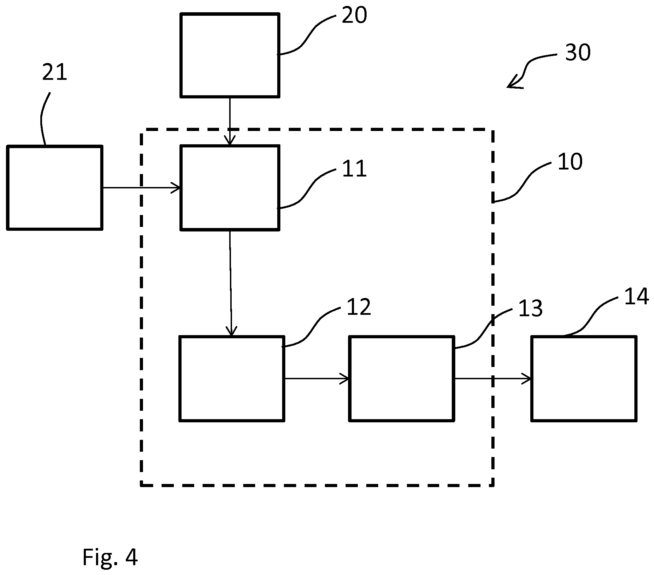

Fig. 1 shows a vehicle 1 in the form of a heavy-duty towing truck which comprises a driver assistance system 30 (see fig. 4) for providing steering assistance to a driver of the vehicle 1 during driving. Although a towing truck is shown, the present invention is also applicable to other types of vehicles, such as buses, light-weight trucks, passenger cars and construction equipment vehicles, such as articulated haulers, excavators, wheel loaders, and backhoe loaders. The vehicle 1 comprises a control unit 10 which may be configured as outlined herein.

The control unit 10 may be one control unit or it may be a plurality of sub-control units which work together. The one or more control units 10 may include a microprocessor, microcontroller, programmable digital signal processor or another programmable device. The control unit 10 may also, or instead, include an application specific integrated circuit, a programmable gate array or programmable array logic, a programmable logic device, or a digital signal processor. Where the control unit 10 includes a programmable device such as the microprocessor, microcontroller or programmable digital signal processor mentioned above, the processor may further include computer executable code that controls operation of the programmable device. The control unit 10 may comprise embedded hardware, sometimes with integrated software, where the hardware show close physical relationship. Examples of physical relationships are: shared casing and components mounted on one or several circuit boards.

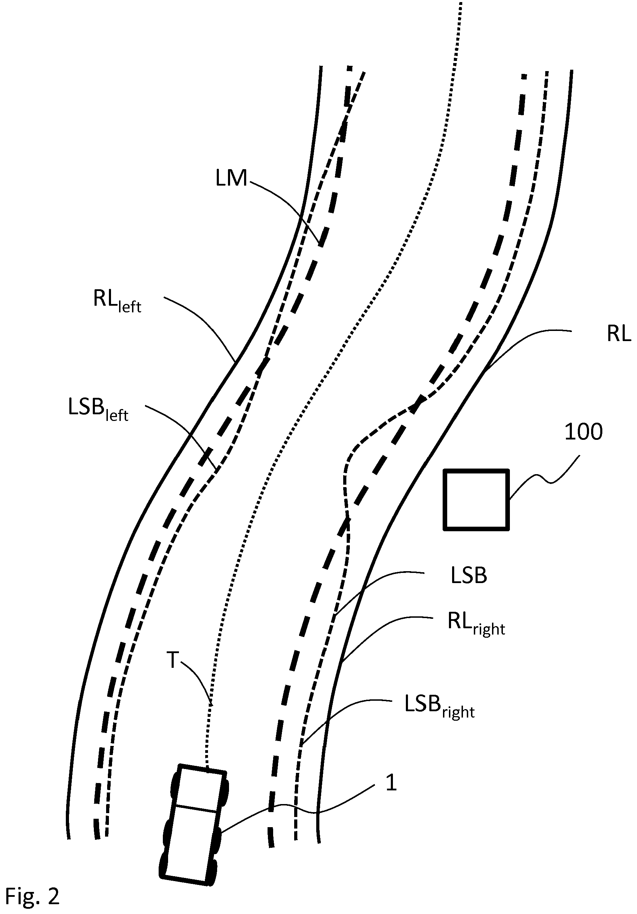

The vehicle 1 as shown in fig. 1 further comprises an external perception sensor system 20, which may be at least one of a camera, LIDAR and RADAR as mentioned in the above. For example, the camera may be a forward facing camera which is able to obtain information about the road lane RL, road lane markings LM, such as white/yellow lines defining an actual road lane, and/or obstacles 100 on the road and in the vicinity of the road, see fig. 2.

Fig. 2 shows a schematic view of a road lane RL along which the vehicle 1 is driving. The road lane RL has lateral road lane limits, RL_{left} and RL_{right}, on the left and on the right hand side with respect to the vehicle 1. The road lane RL is considered as safe for the vehicle 1 when the vehicle 1 is driving within the lateral road lane limits, RL_{left} and RL_{right}. For example, the road lane RL which is considered as safe for the vehicle 1 may correspond to the actual road lane defined by visually identifiable road lane markings LM, but it may also correspond to a larger or a smaller lateral extension with respect the actual road lane. In the shown example, the lateral road lane limit RL_{left} is located outside the actual road lane by a predetermined lateral distance, the outer lateral limit of the actual road lane being defined by the road lane marking LM on the left-hand side of the vehicle 1. Similarly, the lateral road lane limit RL_{right} is located outside the actual road lane by a predetermined lateral distance, the outer lateral limit of the actual road lane being defined by the road lane marking LM on the right-hand side of the vehicle 1. Information about the actual road lane, defined by the road lane markings LM, and the road lane RL may be obtained by the above mentioned external perception sensor system 20, road map data etc.

By use of the obtained information, from e.g. the external perception sensor system 20, direction, curvature and/or change in curvature of the road lane RL may be calculated by the control unit 10. The external perception sensor system 20 may for example obtain measured positions for the road lane markings LM, obstacles 100, but also measured positions for road barriers (not shown), other road users, pedestrians etc. The measured positions may then be used to calculate the direction, curvature and/or change in curvature of the road lane RL. Whether the road lane RL is considered as safe or not may be determined based on surrounding objects 100, and their distances from the road lane RL, road barriers (not shown), and their distances from the road lane RL, road edges (not shown), and their distances from the road lane RL etc. It shall in this respect be understood that objects sometimes may be located within the actual road lane markings LM, thereby resulting in that the road lane RL which is considered as safe will have a smaller lateral extension than the lateral extension of the actual road lane defined by the road lane markings LM. Hence, the road lane RL is preferably a virtual road lane which may not completely correspond to the actual road lane defined by the road lane markings LM. In addition, measured speed and/or acceleration of moving objects, such as other vehicles, may also be used for predicting future position(s) of the moving objects, which in turn may be used when determining if the road lane RL is considered as safe or not.

Further, with respect to e.g. fig. 2, the control unit 10 is further configured to provide steering assistance to the driver for keeping the vehicle 1 within the road lane RL, which steering assistance is based on a trajectory to follow T for the vehicle 1. The control unit 10 is also configured to calculate the trajectory to follow T based on the direction, curvature and/or change in curvature of the road lane RL when the vehicle 1 is laterally positioned within a lateral safe band LSB of the road lane RL and/or when the vehicle 1 is laterally positioned within the lateral safe band LSB of the road lane RL and predicted to not laterally exceed the lateral safe band LSB within a predetermined time period or within a predetermined distance of travel of the vehicle 1, which lateral safe band LSB is defined by predetermined safety margins LSB_{left} and LSB_{right} with respect to the respective lateral road lane limits, RL_{left} and RL_{right}. The predetermined safety margins may be fixed with respect to the respective lateral road lane limits, RL_{left} and RL_{right}, and/or they may vary along the extension of the road lane RL as set forth herein.

In a preferred embodiment, the control unit may be configured to calculate the trajectory to follow T only based on the direction, curvature and/or change in curvature of the road lane RL when the vehicle 1 is laterally positioned within the lateral safe band LSB of the road lane RL and/or when the vehicle 1 is laterally positioned within the lateral safe band LSB of the road lane RL and predicted to not laterally exceed the lateral safe band LSB within a predetermined time period or within a predetermined distance of travel of the vehicle. Further, the driver assistance system 30 is further preferably configured so that the driver is in control of the lateral position of the vehicle 1 when the vehicle is laterally positioned within the lateral safe band LSB of the road lane RL and/or when the vehicle 1 is laterally positioned within the lateral safe band LSB of the road lane and predicted to not laterally exceed the lateral safe band LSB within a predetermined time period or within a predetermined distance of travel of the vehicle. Thereby the driver can more actively take part in the driving, reducing the risk of losing focus.

In addition, the control unit 10 may further be configured to calculate the trajectory to follow T further based on, or only based on, a lateral reference position of the road lane RL with respect to the vehicle 1 when the vehicle 1 is outside the lateral safe band LSB and/or when the vehicle 1 is laterally positioned within the lateral safe band LSB of the road lane RL and predicted to laterally exceed the lateral safe band LSB within a predetermined time period or within a predetermined distance of travel of the vehicle 1. Thereby, in the event the vehicle 1 is outside the lateral safe band LSB and/or predicted to drive out from the lateral safe band LSB, the driver assistance system 30 may support the driver to retain a lateral safe position in shorter time when also the trajectory to follow T is further based on, or only based on, a lateral reference position. The lateral reference position used for calculating the trajectory to follow T may for example be a lateral center position of the road lane RL, i.e. in the middle of the actual road, in-between the lane markings LM, or as another example it may be one of the road lane markings LM.

As can be seen, and as previously mentioned in the above, the predetermined safety margins LSB_{left} and LSB_{right} defining the lateral safe band LSB may be variable along the road lane RL based on e.g. external objects 100 which are considered as unsafe for the vehicle 1 during driving. As can be seen, the predetermined safety margin LSB_{right} at the external object 100 is larger than before and after the external object 100 along the road lane RL. The external object 100 may be another vehicle, a building or any other object which is considered as unsafe for the vehicle 1 during driving. The external object 100 may be stationary or moving, such as a moving vehicle driving in an adjacent road lane. Further, as can also be seen in fig. 2, the predetermined safety margins LSB_{left} and LSB_{right} defining the lateral safe band LSB may be variable along the road lane RL so that the lateral safe band LSB extends outside at least one visually identifiable road lane marking LM when a region outside the at least one visually identifiable road lane marking LM is considered as safe for the vehicle 1 during driving. This is exemplified in the upper right corner of fig. 2 where the predetermined safety margin LSB_{left} extends outside the visually identifiable lane marking LM. Hence, the driver may on some occasions be allowed to drive outside the visually identifiable lane marking LM whilst the trajectory to follow T is calculated only by use of direction, curvature and/or change in curvature of the road lane RL.

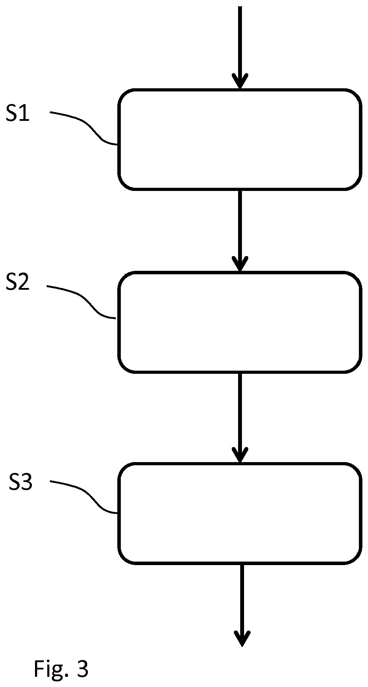

Now turning to fig. 3, a flowchart of a method according to an embodiment of the second aspect of the invention is shown. The method comprises a step S1 of receiving information about direction, curvature and/or change in curvature of a road lane RL ahead of the vehicle 1, which road lane RL is considered as safe for the vehicle 1 when the vehicle 1 is driving within lateral road lane limits RL_{left}, RL_{right} of the road lane RL. The method further comprises a second step S2 wherein a trajectory to follow T is calculated based on the direction, curvature and/or change in curvature when the vehicle 1 is laterally positioned within a lateral safe band LSB of the road lane RL and/or when the vehicle 1 is laterally positioned within the lateral safe band LSB of the road lane RL and predicted to not laterally exceed the lateral safe band LSB within a predetermined time period or within a predetermined distance of travel of the vehicle 1, which lateral safe band LSB is defined by predetermined safety margins LSB_{left}, LSB_{right} with respect to the respective lateral road lane limits RL_{left}, RL_{right}. The method further comprises the step S3 of providing steering assistance to the driver for keeping the vehicle 1 within the road lane RL, which steering assistance is based on the trajectory to follow T for the vehicle 1.

Fig. 4 shows a schematic example embodiment of a driver assistance system 30 for a vehicle 1 according to the present invention. The system 30 comprises a control unit 10 configured as set forth herein, and is connected to, and may comprise, an external perception sensor system 20 as set forth herein, which provides information to the control unit 10. The system 30 is further connected to, and may comprise, a vehicle state sensor system 21 as set forth herein, which also provides information to the control unit 10. The block 11, which is part of the control unit 10 and may be software embedded in the control unit 10, determines where the vehicle 1 can be driven in a safe manner, i.e. it determines the road lane RL which is considered as safe for the vehicle 1 based on the information from the external perception sensor system 20 and from the vehicle state sensor system 21. The block 12, which is part of the control unit 10 and may also be embedded software in the control unit 10, calculates a trajectory to follow T based on direction, curvature and/or change in curvature of the road lane RL when the vehicle 1 is laterally positioned within a lateral safe band LSB of the road lane and/or when the vehicle 1 is laterally positioned within the lateral safe band LSB of the road lane RL and predicted to not laterally exceed the lateral safe band LSB within a predetermined time period or within a predetermined distance of travel of the vehicle. The block 13, which is part of the control unit 10 and may also be embedded software in the control unit 10, calculates required rotation for the vehicle to follow the trajectory to follow T. The rotation is preferably a rotation about the vehicle's yaw axis. The system 30 is further connected to, and may comprise, one or more steering actuators 14 for steering the vehicle's wheels (not shown). It shall in this respect be understood that the vehicle 1 may not necessarily comprise wheels, but may also comprise other ground engaging means, such as crawler means (not shown).

Further, and as stated in the above, the system 30 may be configured so that a strength of the provided steering assistance to the driver for keeping the vehicle 1 within the road lane RL is having different magnitudes depending on the lateral position of the vehicle 1 within the road lane RL, which strength is defined as an amount of torque which the driver needs to add on a manual steering controller (not shown) of the vehicle 1 to alter the vehicle's lateral acceleration. Hence, the required torque by the driver for overriding the steering provided by the one or more steering actuators 14 may vary depending on the lateral position of the vehicle 1. The system 30 is preferably used together with an ACC system as mentioned in the above. The system 30 may be manually activated by the driver and/or automatically activated when it is determined that there may be a need for the system 30 during driving. Similarly, the system 30 may be manually deactivated by the driver and/or automatically deactivated when it for example is determined that the driver is required to take over full control of the driving for safety reasons.

It is to be understood that the present invention is not limited to the embodiments described above and illustrated in the drawings; rather, the skilled person will recognize that many changes and modifications may be made within the scope of the appended claims.

## Claims

1. A driver assistance system (30) for providing steering assistance to a driver of a vehicle (1) during driving, comprising:
a control unit (10) configured to receive information about direction, curvature and/or change in curvature of a road lane (RL) ahead of the vehicle, which road lane is considered as safe for the vehicle when the vehicle is driving within lateral road lane limits (RL_{left}, RL_{right}) of the road lane,
the control unit being further configured to provide steering assistance to the driver for keeping the vehicle within the road lane, which steering assistance is based on a trajectory to follow (T) for the vehicle, **characterized in that**,
the control unit is configured to calculate the trajectory to follow only based on the direction, curvature and/or change in curvature of the road lane when the vehicle is laterally positioned within a lateral safe band (LSB) of the road lane and/or when the vehicle is laterally positioned within the lateral safe band of the road lane and predicted to not laterally exceed the lateral safe band within a predetermined time period or within a predetermined distance of travel of the vehicle, which lateral safe band is defined by predetermined safety margins (LSB_{left}, LSB_{right}) with respect to the respective lateral road lane limits.

2. The driver assistance system according to any one of the preceding claims, wherein the system is configured so that the driver is in control of the lateral position of the vehicle when the vehicle is laterally positioned within the lateral safe band of the road lane and/or when the vehicle is laterally positioned within the lateral safe band of the road lane and predicted to not laterally exceed the lateral safe band within a predetermined time period or within a predetermined distance of travel of the vehicle.

3. The driver assistance system according to any one of the preceding claims, wherein the control unit is further configured to calculate the trajectory to follow further based on, or only based on, a lateral reference position of the road lane with respect to the vehicle when the vehicle is outside the lateral safe band and/or when the vehicle is laterally positioned within the lateral safe band of the road lane and predicted to laterally exceed the lateral safe band within a predetermined time period or within a predetermined distance of travel of the vehicle.

4. The driver assistance system according to any one of the preceding claims, wherein the road lane is a virtual road lane created by information from at least one of an external perception sensor system (20) of the vehicle, a vehicle state sensor system (21) and auxiliary data, such as road map data and/or GNSS data.

5. The driver assistance system according to any one of the preceding claims, wherein the predetermined safety margins defining the lateral safe band are variable along the road lane based on external objects (100) which are considered as unsafe for the vehicle during driving.

6. The driver assistance system according to any one of the preceding claims, wherein the predetermined safety margins defining the lateral safe band are variable along the road lane so that the lateral safe band extends outside at least one visually identifiable road lane marking (LM) when a region outside the at least one visually identifiable road lane marking is considered as safe for the vehicle during driving.

7. The driver assistance system according to any one of the preceding claims, wherein the system is configured so that a strength of the provided steering assistance to the driver for keeping the vehicle within the road lane is having different magnitudes depending on the lateral position of the vehicle within the road lane, which strength is defined as an amount of torque which the driver needs to add on a manual steering controller of the vehicle to alter the vehicle's lateral acceleration.

8. The driver assistance system according to claim 7, wherein the system is configured so that the magnitude of the strength of the provided steering assistance is lower when the vehicle is laterally positioned within the lateral safe band than the magnitude of the strength of the provided steering assistance when the vehicle is laterally positioned outside the lateral safe band and/or the magnitude of the strength of the provided steering assistance is lower when the vehicle is laterally positioned within the lateral safe band and predicted to not laterally exceed the lateral safe band within a predetermined time period or within a predetermined distance of travel of the vehicle than the magnitude of the strength of the provided steering assistance when the vehicle is laterally positioned within the lateral safe band of the road lane and predicted to laterally exceed the lateral safe band within the predetermined time period or within the predetermined distance of travel of the vehicle.

9. A method for providing steering assistance to a driver of a vehicle during driving, comprising:
- receiving (S1) information about direction, curvature and/or change in curvature of a road lane ahead of the vehicle, which road lane is considered as safe for the vehicle when the vehicle is driving within lateral road lane limits of the road lane,
- providing (S3) steering assistance to the driver for keeping the vehicle within the road lane, which steering assistance is based on a trajectory to follow for the vehicle, and
- calculating (S2) the trajectory to follow only based on the direction, curvature and/or change in curvature when the vehicle is laterally positioned within a lateral safe band of the road lane and/or when the vehicle is laterally positioned within the lateral safe band of the road lane and predicted to not laterally exceed the lateral safe band within a predetermined time period or within a predetermined distance of travel of the vehicle, which lateral safe band is defined by predetermined safety margins with respect to the respective lateral road lane limits.

10. The method according to claim 9, wherein the method is configured so that the driver is in control of the lateral position of the vehicle when the vehicle is laterally positioned within the lateral safe band and/or when the vehicle is laterally positioned within the lateral safe band of the road lane and predicted to not laterally exceed the lateral safe band within a predetermined time period or within a predetermined distance of travel of the vehicle.

11. The method according to any one claims 9-10, further comprising calculating the trajectory to follow further based on, or only based on, a lateral reference position of the road lane with respect to the vehicle when the vehicle is outside the lateral safe band and/or when the vehicle is laterally positioned within the lateral safe band of the road lane and predicted to laterally exceed the lateral safe band within a predetermined time period or within a predetermined distance of travel of the vehicle.

12. The method according to any one of claims 9-11, wherein the road lane is a virtual road lane created by information from at least one of an external perception sensor system of the vehicle, a vehicle state sensor system and auxiliary data, such as road map data and/or GNSS data.

13. A vehicle (1) comprising the driver steering assistance system according to any one of claims 1-8.

14. A computer program comprising program code means for performing the steps of any of claims 9-12, when said program is run on a computer.

15. A computer readable medium carrying a computer program comprising program code means for performing the steps of any of claims 9-12, when said program product is run on a computer.

## Patentansprüche

1. Fahrerassistenzsystem (30) zur Bereitstellung von Lenkunterstützung für einen Fahrer eines Fahrzeugs (1) während der Fahrt, umfassend:
eine Steuereinheit (10), die konfiguriert ist, um Informationen über eine Richtung, Krümmung und/oder Änderung der Krümmung einer Fahrspur (RL) vor dem Fahrzeug zu empfangen, wobei die Fahrspur als sicher für das Fahrzeug gilt, wenn das Fahrzeug innerhalb der seitlichen Fahrspurgrenzen (RL_{left}, RL_{right}) der Fahrspur fährt,
wobei die Steuereinheit ferner konfiguriert ist, um dem Fahrer Lenkunterstützung bereitzustellen, um das Fahrzeug innerhalb der Fahrspur zu halten, wobei die Lenkunterstützung auf einer zu verfolgenden Trajektorie (T) für das Fahrzeug basiert, **dadurch gekennzeichnet, dass**
die Steuereinheit konfiguriert ist, um die zu verfolgende Trajektorie nur basierend auf der Richtung, Krümmung und/oder Krümmungsänderung der Fahrspur zu berechnen, wenn das Fahrzeug seitlich innerhalb eines seitlichen Sicherheitsbereichs (LSB) der Fahrspur positioniert ist und/oder wenn das Fahrzeug seitlich innerhalb des seitlichen Sicherheitsbereichs der Fahrspur positioniert ist und vorhergesagt wird, dass es den seitlichen Sicherheitsbereich innerhalb eines vorbestimmten Zeitraums oder innerhalb einer vorbestimmten Fahrstrecke des Fahrzeugs nicht seitlich überschreitet, wobei der seitliche Sicherheitsbereich durch vorbestimmte Sicherheitsmargen (LSB_{left}, LSB_{right}) in Bezug auf die jeweiligen seitlichen Fahrspurgrenzen definiert ist.

2. Fahrerassistenzsystem nach einem der vorhergehenden Ansprüche, wobei das System so konfiguriert ist, dass der Fahrer die Kontrolle über die seitliche Position des Fahrzeugs hat, wenn das Fahrzeug seitlich innerhalb des seitlichen Sicherheitsbereichs der Fahrspur positioniert ist und/oder wenn das Fahrzeug seitlich innerhalb des seitlichen Sicherheitsbereichs der Fahrspur positioniert ist und vorhergesagt wird, dass es den seitlichen Sicherheitsbereich innerhalb eines vorbestimmten Zeitraums oder innerhalb einer vorbestimmten Fahrstrecke des Fahrzeugs nicht seitlich überschreitet.

3. Fahrerassistenzsystem nach einem der vorhergehenden Ansprüche, wobei die Steuereinheit ferner konfiguriert ist, um die weiter zu verfolgende Trajektorie basierend auf oder nur basierend auf einer seitlichen Referenzposition der Fahrspur in Bezug auf das Fahrzeug zu berechnen, wenn sich das Fahrzeug außerhalb des seitlichen Sicherheitsbereichs befindet und/oder wenn das Fahrzeug seitlich innerhalb des seitlichen Sicherheitsbereichs der Fahrspur positioniert ist und vorhergesagt wird, dass es den seitlichen Sicherheitsbereich innerhalb eines vorbestimmten Zeitraums oder innerhalb einer vorbestimmten Fahrstrecke des Fahrzeugs seitlich überschreitet.

4. Fahrerassistenzsystem nach einem der vorhergehenden Ansprüche, wobei die Fahrspur eine virtuelle Fahrspur ist, die durch Informationen von mindestens einem externen Wahrnehmungssensorsystem (20) des Fahrzeugs, einem Fahrzeugzustandssensorsystem (21) und Hilfsdaten, wie etwa Straßenkartendaten und/oder GNSS-Daten, erzeugt wird.

5. Fahrerassistenzsystem nach einem der vorhergehenden Ansprüche, wobei die vorbestimmten Sicherheitsabstände, die den seitlichen Sicherheitsbereich definieren, entlang der Fahrspur variabel sind, basierend auf externen Objekten (100), die als unsicher für das Fahrzeug während der Fahrt gelten.

6. Fahrerassistenzsystem nach einem der vorhergehenden Ansprüche, wobei die vorbestimmten Sicherheitsmargen, die den seitlichen Sicherheitsbereich definieren, entlang der Fahrspur variabel sind, so dass sich der seitliche Sicherheitsbereich außerhalb mindestens einer visuell identifizierbaren Fahrspurmarkierung (LM) erstreckt, wenn ein Bereich außerhalb der mindestens einen visuell identifizierbaren Fahrspurmarkierung als sicher für das Fahrzeug während der Fahrt angesehen wird.

7. Fahrerassistenzsystem nach einem der vorhergehenden Ansprüche, wobei das System so konfiguriert ist, dass eine Stärke der bereitgestellten Lenkunterstützung für den Fahrer das Fahrzeug innerhalb der Fahrspur zu halten, unterschiedliche Größen aufweist, abhängig von der seitlichen Position des Fahrzeugs innerhalb der Fahrspur, wobei die Stärke als ein Betrag des Drehmoments definiert ist, den der Fahrer an einer manuellen Lenksteuerung des Fahrzeugs hinzufügen muss, um die Querbeschleunigung des Fahrzeugs zu ändern.

8. Fahrerassistenzsystem nach Anspruch 7, wobei das System so konfiguriert ist, dass die Stärke der bereitgestellten Lenkunterstützung geringer ist, wenn das Fahrzeug seitlich innerhalb des seitlichen Sicherheitsbereichs positioniert ist, als die Stärke der bereitgestellten Lenkunterstützung, wenn das Fahrzeug seitlich außerhalb des seitlichen Sicherheitsbereichs positioniert ist, und/oder die Stärke der bereitgestellten Lenkunterstützung geringer ist, wenn das Fahrzeug seitlich innerhalb des seitlichen Sicherheitsbereichs positioniert ist und vorhergesagt wird, dass es den seitlichen Sicherheitsbereich innerhalb eines vorbestimmten Zeitraums oder innerhalb einer vorbestimmten Fahrstrecke des Fahrzeugs nicht seitlich überschreitet, als die Größe der Stärke der bereitgestellten Lenkunterstützung, wenn das Fahrzeug seitlich innerhalb des seitlichen Sicherheitsbereichs der Fahrspur positioniert ist und vorhergesagt wird, dass es den seitlichen Sicherheitsbereich innerhalb des vorbestimmten Zeitraums oder innerhalb der vorbestimmten Fahrstrecke des Fahrzeugs seitlich überschreitet.

9. Verfahren zur Bereitstellung von Lenkunterstützung für einen Fahrer eines Fahrzeugs während der Fahrt, umfassend:
- Empfangen (S1) von Informationen über eine Richtung, Krümmung und/oder Krümmungsänderung einer Fahrspur vor dem Fahrzeug, wobei die Fahrspur als sicher für das Fahrzeug gilt, wenn das Fahrzeug innerhalb der seitlichen Fahrspurgrenzen der Fahrspur fährt,
- Bereitstellen (S3) von Lenkunterstützung für den Fahrer, um das Fahrzeug innerhalb der Fahrspur zu halten, wobei die Lenkunterstützung auf einer zu verfolgenden Trajektorie für das Fahrzeug basiert, und
- Berechnen (S2) der zu verfolgenden Trajektorie nur basierend auf der Richtung, der Krümmung und/oder der Krümmungsänderung, wenn das Fahrzeug seitlich innerhalb eines seitlichen Sicherheitsbereichs der Fahrspur positioniert ist und/oder wenn das Fahrzeug seitlich innerhalb des seitlichen Sicherheitsbereichs der Fahrspur positioniert ist und vorhergesagt wird, dass es den seitlichen Sicherheitsbereich innerhalb eines vorbestimmten Zeitraums oder innerhalb einer vorbestimmten Fahrstrecke des Fahrzeugs nicht seitlich überschreitet, wobei der seitliche Sicherheitsbereich durch vorbestimmte Sicherheitsabstände in Bezug auf die jeweiligen seitlichen Fahrspurgrenzen definiert ist.

10. Verfahren nach Anspruch 9, wobei das Verfahren so konfiguriert ist, dass der Fahrer die Kontrolle über die seitliche Position des Fahrzeugs hat, wenn das Fahrzeug seitlich innerhalb des seitlichen Sicherheitsbereichs der Fahrspur positioniert ist und/oder wenn das Fahrzeug seitlich innerhalb des seitlichen Sicherheitsbereichs der Fahrspur positioniert ist und vorhergesagt wird, dass es den seitlichen Sicherheitsbereich innerhalb eines vorbestimmten Zeitraums oder innerhalb einer vorbestimmten Fahrstrecke des Fahrzeugs nicht seitlich überschreitet.

11. Verfahren nach einem der Ansprüche 9-10, ferner umfassend das Berechnen der zu verfolgenden Trajektorie basierend auf oder nur basierend auf einer seitlichen Referenzposition der Fahrspur in Bezug auf das Fahrzeug, wenn sich das Fahrzeug außerhalb des seitlichen Sicherheitsbereichs befindet und/oder wenn das Fahrzeug seitlich innerhalb des seitlichen Sicherheitsbereichs der Fahrspur positioniert ist und vorhergesagt wird, dass es den seitlichen Sicherheitsbereich innerhalb eines vorbestimmten Zeitraums oder innerhalb einer vorbestimmten Fahrstrecke des Fahrzeugs seitlich überschreitet.

12. Verfahren nach einem der Ansprüche 9-11, wobei die Fahrspur eine virtuelle Fahrspur ist, die durch Informationen von mindestens einem externen Wahrnehmungssensorsystem des Fahrzeugs, einem Fahrzeugzustandssensorsystem und Hilfsdaten, wie etwa Straßenkartendaten und/oder GNSS-Daten, erzeugt wird.

13. Fahrzeug (1) umfassend das Fahrerassistenzsystem nach einem der Ansprüche 1-8.

14. Computerprogramm, das Programmcodemittel zum Durchführen der Schritte nach einem der Ansprüche 9-12 umfasst, wenn das Programm auf einem Computer ausgeführt wird.

15. Computerlesbares Medium mit einem Computerprogramm, das Programmcodemittel zum Durchführen der Schritte nach einem der Ansprüche 9-12 umfasst, wenn das Programmprodukt auf einem Computer ausgeführt wird.

## Revendications

1. Système d'assistance au conducteur (30) destiné à fournir une assistance de direction au conducteur d'un véhicule (1) pendant la conduite, comprenant :
une unité de commande (10) configurée pour recevoir des informations sur la direction, la courbure et/ou un changement de courbure d'une voie de circulation (RL) devant le véhicule, laquelle voie de circulation est considérée comme sécurisée pour le véhicule lorsque celui-ci roule dans les limites de voie latérale (RL_{left}, RL_{right}) de la voie de circulation,
l'unité de commande étant en outre configurée pour fournir une assistance de direction au conducteur pendant le maintien du véhicule dans la voie de circulation, laquelle assistance à la direction est basée sur une trajectoire à suivre (T) pour le véhicule, **caractérisé en ce que**
l'unité de commande est configurée pour calculer la trajectoire à suivre uniquement sur la base de la direction, de la courbure et/ou du changement de courbure de la voie de circulation lorsque le véhicule est positionné latéralement dans une bande latérale de sécurité (LSB) de la voie de circulation et/ou lorsque le véhicule est positionné latéralement dans la bande latérale de sécurité de la voie de circulation et qu'il est prévu qu'il ne va pas dépasser latéralement la bande de sécurité latérale dans un laps de temps prédéterminé ou dans une distance prédéterminée de déplacement du véhicule, laquelle bande de sécurité latérale est définie par des marges de sécurité prédéterminées (LSB_{left}, LSB_{right}) par rapport aux limites latérales respectives de la voie.

2. Système d'assistance au conducteur selon l'une quelconque des revendications précédentes, le système étant configuré de sorte que le conducteur contrôle la position latérale du véhicule lorsque le véhicule est positionné latéralement dans la bande latérale de sécurité de la voie de circulation et/ou lorsque le véhicule est positionné latéralement dans la bande latérale de sécurité de la voie de circulation et qu'il est prévu qu'il ne va pas dépasser latéralement la bande de sécurité latérale dans un laps de temps prédéterminé ou sur une distance prédéterminée de déplacement du véhicule.

3. Système d'assistance au conducteur selon l'une quelconque des revendications précédentes, dans lequel l'unité de commande est en outre configurée pour calculer la trajectoire à suivre sur la base, ou uniquement sur la base, d'une position de référence latérale de la voie de circulation par rapport au véhicule lorsque le véhicule se trouve en dehors de la bande de sécurité latérale et/ou lorsque le véhicule se trouve latéralement positionné dans la bande latérale sécurisée de la voie de circulation et qu'il est prévu qu'il ne va pas dépasser latéralement la bande de sécurité latérale dans un laps de temps prédéterminé ou sur une distance de déplacement prédéterminée du véhicule.

4. Système d'assistance au conducteur selon l'une quelconque des revendications précédentes, dans lequel la voie de circulation est une voie de circulation virtuelle créée par des informations provenant d'au moins un système parmi un système de détection de perception externe (20) du véhicule, un système de détection d'état de véhicule (21) et des données auxiliaires, telles que des données de carte routière et/ou des données GNSS.

5. Système d'assistance au conducteur selon l'une quelconque des revendications précédentes, dans lequel les marges de sécurité prédéterminées définissant la bande de sécurité latérale sont variables le long de la voie de circulation en fonction d'objets externes (100) qui sont considérés comme dangereux pour le véhicule pendant la conduite.

6. Système d'assistance au conducteur selon l'une quelconque des revendications précédentes, dans lequel les marges de sécurité prédéterminées définissant la bande de sécurité latérale sont variables le long de la voie de circulation de sorte que la bande de sécurité latérale s'étende à l'extérieur d'au moins un marquage de voie de circulation (LM) visuellement identifiable lorsqu'une zone à l'extérieur de l'au moins un marquage de voie de circulation visuellement identifiable soit considérée comme sécurisée pour le véhicule pendant la conduite.

7. Système d'assistance au conducteur selon l'une quelconque des revendications précédentes, le système étant configuré de telle sorte qu'une force de l'assistance de direction fournie au conducteur pour maintenir le véhicule dans la voie de circulation présente des grandeurs différentes en fonction de la position latérale du véhicule dans la voie de circulation, laquelle force est définie comme une amplitude de couple que le conducteur doit ajouter sur un contrôleur de direction manuel du véhicule pour modifier l'accélération latérale du véhicule.

8. Système d'assistance au conducteur selon la revendication 7, le système étant configuré de sorte que l'intensité de l'assistance à la direction fournie soit inférieure, lorsque le véhicule est positionné latéralement dans la bande latérale de sécurité, à l'intensité de l'assistance à la direction fournie lorsque le véhicule est positionné latéralement à l'extérieur de la bande latérale de sécurité et/ou que l'intensité de l'assistance à la direction fournie soit inférieure, lorsque le véhicule est positionné latéralement dans la bande latérale de sécurité et qu'il est prévu qu'il ne va pas dépasser latéralement la bande de sécurité latérale dans un laps de temps prédéterminé ou sur une distance prédéterminée de déplacement du véhicule, à l'amplitude de la force de l'assistance à la direction fournie lorsque le véhicule est positionné latéralement dans la bande de sécurité latérale de la voie de circulation et qu'il est prévu qu'il ne va pas dépasser latéralement la bande de sécurité latérale dans le laps de temps prédéterminé ou dans la distance prédéterminée de déplacement du véhicule.

9. Procédé pour fournir une assistance à la direction au conducteur d'un véhicule pendant la conduite, comprenant :
- la réception (S1) d'informations sur la direction, la courbure et/ou le changement de courbure d'une voie de circulation devant le véhicule, laquelle voie de circulation est considérée comme sécurisée pour le véhicule lorsque le véhicule roule dans les limites latérales de la voie de circulation,
- la fourniture (S3) d'une assistance à la direction au conducteur pour maintenir le véhicule sur la voie de circulation, laquelle assistance à la direction est basée sur une trajectoire à suivre pour le véhicule, et
- le calcul (S2) de la trajectoire à suivre uniquement en fonction de la direction, de la courbure et/ou du changement de courbure lorsque le véhicule est positionné latéralement dans une bande latérale sécurisée de la voie de circulation et/ou lorsque le véhicule est positionné latéralement dans la bande latérale de sécurité de la voie de circulation et qu'il est prévu qu'il ne va pas dépasser latéralement la bande latérale de sécurité dans une durée prédéterminée ou sur une distance prédéterminée de déplacement du véhicule, laquelle bande de sécurité latérale est définie par des marges de sécurité prédéterminées par rapport aux limites de voie latérale respectives.

10. Procédé selon la revendication 9, dans lequel le procédé est configuré de telle sorte que le conducteur contrôle la position latérale du véhicule lorsque celui-ci est positionné latéralement dans la bande de sécurité latérale et/ou lorsque le véhicule est positionné latéralement dans la bande de sécurité latérale de la voie de circulation et qu'il est prévu qu'il ne va pas dépasser latéralement la bande de sécurité latérale dans un laps de temps prédéterminé ou sur une distance prédéterminée de déplacement du véhicule.

11. Procédé selon l'une quelconque des revendications 9 à 10, comprenant en outre le calcul de la trajectoire à suivre en fonction, ou uniquement en fonction, d'une position de référence latérale de la voie de circulation par rapport au véhicule lorsque le véhicule se trouve en dehors de la bande latérale de sécurité et/ou lorsque le véhicule est positionné latéralement dans la bande latérale de sécurité de la voie de circulation et qu'il prévu qu'il ne va dépasser latéralement la bande de sécurité latérale dans un laps de temps prédéterminé ou sur une distance prédéterminée de déplacement du véhicule.

12. Procédé selon l'une quelconque des revendications 9 à 11, dans lequel la voie de circulation est une voie de circulation virtuelle créée par des informations provenant d'au moins d'un système de capteur de perception externe du véhicule, d'un système de détection de l'état du véhicule et de données auxiliaires, telles que des données de carte routière et/ou des données GNSS.

13. Véhicule (1) comprenant le système d'assistance à la direction du conducteur selon l'une quelconque des revendications 1 à 8.

14. Programme informatique comprenant un moyen de code de programme pour exécuter les étapes de l'une quelconque des revendications 9 à 12, lorsque ledit programme est exécuté sur un ordinateur.

15. Support lisible par ordinateur comportant un programme informatique comprenant un moyen de code de programme pour exécuter les étapes de l'une quelconque des revendications 9 à 12, lorsque ledit produit de programme est exécuté sur un ordinateur.
